# EUROPEAN PATENT APPLICATION

(11) **EP 1 435 751 A1**
(43) Date of publication of application: **07.07.2004**
(21) Application number: 03030015.6
(22) Date of filing: 30.12.2003
(51) Int. Cl.: H04Q 7/38

(54) **Method for transmitting paging information for broadcast service in a MBMS (Multimedia Broadcast/Multicast Service) mobile communication system**

(30) Priority: 31.12.2002 KR 2002087993
(71) Applicant: Samsung Electronics Co., Ltd., Suwon-city, Gyeonggi-do (KR)
(72) Inventor: Kim, Wuk, c/o Samsung Electronics Co., Ltd., Suwon-si Gyeonggi-do (KR); Park, Joon-Goo, c/o Samsung Electronics Co., Ltd., Suwon-si Gyeonggi-do (KR); Kim, Soeng-Hun, c/o Samsung Electronics Co., Ltd., Suwon-si Gyeonggi-do (KR); Lee, Kook-Heui, c/o Samsung Electronics Co., Ltd., Suwon-si Gyeonggi-do (KR); Choi, Sung-Ho, c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is a method for transmitting a paging message for a broadcast service in a MBMS mobile communication system having a plurality of user equipments (UEs), a plurality of cells where the UEs are located, a Node B occupying the cells, and a radio network controller (RNC) controlling the Node B, the system providing the broadcast service transmitted from a core network to the UEs via the RNC. In the method, the core network transmits to the RNC information on the UEs in connected mode, among the UEs desiring to receive the broadcast service, along with the paging message for the broadcast service.

## Description

### BACKGROUND OF THE INVENTION

### 1. Field of the Invention

The present invention relates generally to a mobile communication system, and in particular, to a method for transmitting paging information in a mobile communication system employing a multimedia broadcast/multicast service (MBMS) in which the same service is simultaneously provided to a plurality of user equipments (UEs).

### 2. Description of the Related Art

Recent developments in the code division multiple access (CDMA) mobile communication system provides multicasting multimedia communication that transmits not only voice data but also mass data such as packet data and circuit data. In order to support the multicasting multimedia communication, there has been proposed a broadcast/multicast service in which a particular service is provided from one data source to a plurality of UEs. The broadcast/multicast service can be classified into a cell broadcast service (CBS) which is a message-oriented service, and a multimedia broadcast/multicast service (MBMS) that supports multimedia data such as real-time image and voice, still image, and text. Here, "MBMS" refers to a service for transmitting the same multimedia data to a plurality of receiptors, or UEs, registered for an MBMS service over a common channel through a radio network.

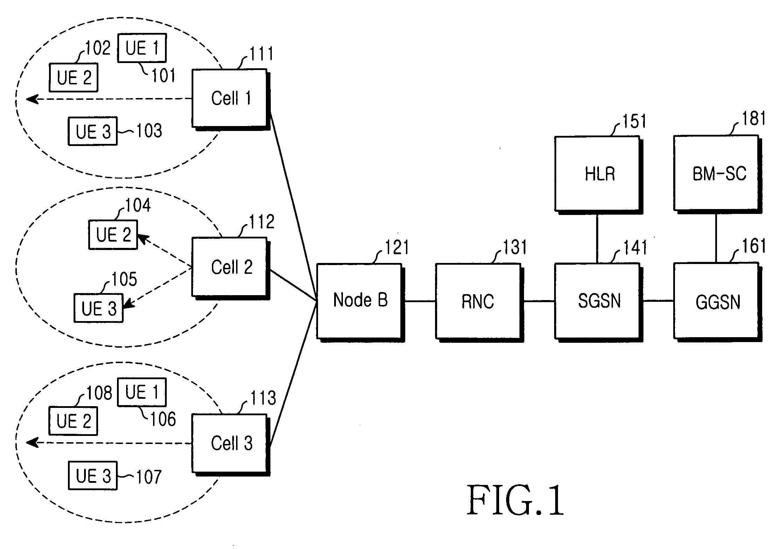

FIG 1 is a block diagram illustrating a network configuration for an MBMS service. In FIG. 1, UEs 101 to 108 represent terminal devices or subscribers capable of receiving an MBMS service, and cell#1 111 to cell#3 113 represent cell areas of a base station to which the UEs belong.

A Node B 121 represents a base station that transmits MBMS data to subscribers via an air interface. A radio network controller (RNC) 131 represents a base station controller for controlling a plurality of Node Bs, and selectively transmits multimedia data to a particular Node B and controls a radio channel set up to provided an MBMS service. RNCs, Node Bs controlled by each of the RNCs, and cells belonging to each of the Node Bs constitute a UTRAN (UMTS (Universal Mobile Telecommunications System) Terrestrial Radio Access Network), and the UTRAN serves as a radio communication network connecting a UE to a core network (CN).

A serving GPRS (General Packet Radio Service) support node (SGSN) 141 controls an MBMS service of each subscriber. For example, the SGSN 141 manages service accounting data of each subscriber, selectively transmits multimedia data to a particular RNC, and monitors a moving condition of each UE. A home location register (HLR) 151, connected to the SGSN 141, authenticates a subscriber.

The BM-SC 181 delivers the MBMS data to the GGSN 161. Further, the BM-SC 181 provides authentication, service quality decision of an MBMS service, an error correction function for MBMS data loss, accounting, and actual contents of an MBMS service currently being provided to a UE.

An MBMS service fundamentally uses a point-to-multipoint (PTM) scheme, but it can also adopt a point-to-point (PTP) scheme in parallel with the PTM scheme. The PTM scheme refers to a transmission scheme for transmitting data to up to an end of a cell using a common channel as shown in the cells 111 and 113 of FIG 1, while the PTP scheme refers to a transmission scheme for forming a separate channel for each UE and transmitting data over the separate channel as shown in the cell 112. Since the PTP transmission scheme fundamentally uses an existing dedicated channel, it is identical in operation to the existing IP Multicast scheme. The MBMS service fundamentally uses the PTM transmission scheme.

A brief description will now be made of an entire procedure for providing an MBMS service. First, through a Subscription process, a UE sends a service registration request to a service provider that provides an MBMS service. At this point, if a network desires to provide a particular MBMS service, it sends a Service Announcement message to UEs registered for the MBMS service, and the UEs then perform a Joining process in order to receive the corresponding MBMS service. Thereafter, the network assigns network resources for transmitting MBMS data to a multicast area. At this point, through a MBMS service announcement, the network informs the UEs that the requested MBMS service data will be delivered soon. Thereafter, the network regularly transmits MBMS data to the UEs. Meanwhile, when the MBMS data is no longer delivered, resources for delivering the MBMS data are released.

In order to inform that MBMS data will be delivered soon, or to transmit control information for radio resource assignment, a method for providing paging information to a plurality of UEs is required. In this regard, a description will now be made of a conventional paging procedure. In a mobile communication network, for paging, a CN requests a UTRAN to set up call connection to a UE, i.e., prepare for Radio Bearer Setup, or delivers specific information to the UE regardless of whether the current state is an idle state or a connected state.

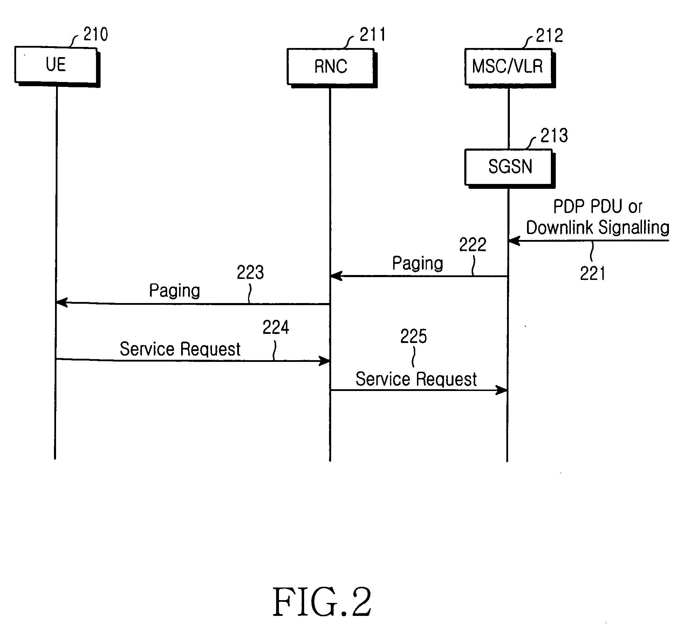

The existing paging method is disadvantageous in that its radio resource efficiency is decreased when the number of UEs is increased. In addition, radio resources are allocated without taking into account a state of each UE, causing an increase in a processing time to assign the radio resource. This will be described in detail below with reference to FIG 2.

FIG 2 is a flow diagram illustrating transmission of a paging signal between an SGSN 213 and an MSCNLR (Mobile Switching Center/Visitor Location Register) 212 located in a CN, and RNC (Radio Network Controller) 211 and a UE 210 in a UTRAN. The paging is achieved through message transmission in the following five steps (Steps 221 to 225).

First, the SGSN 213 receives PDP (Packet Data Protocol) PDU (Packet Data Unit) for paging or a downlink signaling signal to be delivered to a UE, from other blocks (GGSN or BM-SC) of the CN (Step 221).

The SGSN 213 delivers a Paging message to the RNC 211 that controls a routing area where the UE 210 is located, through RANAP (Radio Access Network Application Part) between a CN and an RNC (Step 222). Here, the Paging message includes IMSI (International Mobile Station Identifier) and P-TMSI (Packet-Temporary Mobile Station Identifier) information of a UE, and such IEs (Information Elements) as Paging Area, CN Domain Indicator, and Discontinuous Reception (DRX) Cycle Length Coefficient. IMSI and P-TMSI are used to identify a UE, and Paging Area indicates in which routing area the UE is located. A CS (Circuit Switched) network or a PS (Packet Switched) network is indicated by the CN Domain Indicator. DRX Cycle Length is an IE used when a UE intends to perform discontinuous reception at regular intervals without continuously awaiting a Paging message in order to reduce power consumption, and can be determined through negotiation between a CN and a UE.

An RNC controls a state of a radio resource connection (RRC) by a UE, and when there is no RRC connection (idle mode), normal PICH (Pilot Channel) Paging request is made (Step 223). In contrast, when there is an RRC connection (connected mode), a Paging message is delivered using a dedicated control channel (DCCH).

The Paging request made in Step 223 ends the paging procedure by allowing the UE to send a corresponding service request to the network (Steps 224 and 225).

When the UE is in an idle mode in Step 223, the UE receives a PICH signal transmitted periodically from a Node B, and determines whether a paging channel (PCH) signal is transmitted thereto, based on the received PICH signal. Information on the PICH is included in a system information block (SIB) of a broadcast channel (BCH). Therefore, the UE can acquire the PICH information by analyzing the BCH, and in this way, it can receive the PICH signal.

Meanwhile, the paging procedure refers to all processes of paging a particular UE by a network, and in paging a UE, the network uses the DRX scheme in order to minimize power consumption of the UE. In the DRX scheme, the UE, together with the network, previously appoints a time when the UE turns on its receiver to receive a paging message, and then receives a paging message only at the appointed time. Therefore, the UE using the DRX scheme turns on its receiver only at a time previously appointed with the network, and turns off the receiver at a time other than the appointed time, thereby minimizing its power consumption. More specifically, the UE receives a PICH signal at a paging occasion (PO), and receives a paging message delivered over PCH when a corresponding paging instance (PI) of the received PICH signal is set to '1'.

Such an existing paging method aimed at Radio Bearer Setup for call connection or transmission of a short message service (SMS) message is performed by a PTP scheme between a UE and a CN. When a paging message is simultaneously transmitted to several users, IMSI values of UEs located in Paging Area or IMSI values of UEs requesting the corresponding service are sequentially referred to. The RNC performs a control operation of changing a paging transfer method according to an RRC state of the UE.

Even when transmitting a paging message to UEs registered to simultaneously receive an MBMS service, the conventional paging method repeatedly performs the above processes on each of the UEs. As a result, inefficiency of the network resources may be increased, and a processing time may be increased in proportion to the number of MBMS service subscribers.

### SUMMARY OF THE INVENTION

It is, therefore, an object of the present invention to provide a method for transmitting paging information for an MBMS service to a UE in a connected mode in a mobile communication system.

It is another object of the present invention to provide a method for transmitting paging information considering an RRC state of each UE by a core network in a mobile communication system supporting an MBMS service.

It is further another object of the present invention to provide a method for transmitting by a core network a paging message including identity (ID) information indicating an MBMS service area in a mobile communication system supporting the MBMS service.

It is yet another object of the present invention to provide a method for transmitting by a core network a paging message including identity information for a cell not supporting an MBMS service in a mobile communication system supporting the MBMS service.

It is still another object of the present invention to provide a method for transmitting a paging message including information on UEs in a connected mode from a core network to an RNC and then transmitting the paging message from the RNC to a particular UE using a dedicated control channel (DCCH) set up to each of the UEs in the connected mode, in a mobile communication system supporting an MBMS service.

To achieve the above and other objects, there is provided a method for transmitting a paging message for a broadcast service in a mobile communication system including a plurality of user equipments (UEs), a plurality of cells where the UEs are located, a Node B occupying the cells, and a radio network controller (RNC) controlling the Node B, the system providing the broadcast service transmitted from a core network to the UEs via the RNC. In the method, the core network transmits information relating to UEs in a connected mode among UEs desiring to receive the broadcast service to the RNC along with the paging message for the broadcast service.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram illustrating a network configuration of an MBMS service system;
FIG 2 is a flow diagram illustrating a paging procedure between a core network and a UTRAN in a conventional mobile communication system;
FIG 3 is a flow diagram illustrating a paging procedure between a core network and a UTRAN in an MBMS service system according to an embodiment of the present invention; and
FIG 4 is a diagram illustrating a network configuration in which UEs have different RRC states in an MBMS service area according to an embodiment of the present invention.

### DETAILED DESCRIPTION OF THE PREFERRED EMBODIMENT

A preferred embodiment of the present invention will now be described in detail with reference to the annexed drawings. In the following description, a detailed description of known functions and configurations incorporated herein has been omitted for conciseness.

The present invention provides a method for transmitting a paging message including RRC state information of a UE desiring to receive an MBMS service, information on a service area supporting the MBMS service, and information on a reception cycle for which the MBMS service is to be received, from a core network to an RNC. Each UE supports the MBMS paging using a temporary MBMS group identity (TMGI) indicating the MBMS service group, instead of using one IMSI or P-TMSI.

Therefore, an RNC, receiving the paging message, efficiently uses radio resource through information included in the received paging message. Here, the paging message can be used in announcing the MBMS service or determining the number of UEs in the RNC, which have requested the MBMS service.

The present invention is proposed to support group paging required in simultaneously notifying UEs desiring to receive an MBMS service of initiation of the MBMS service or transmitting control information for the MBMS service. Further, the present invention provides a method for defining a service area and simultaneously delivering a paging message to a plurality of UEs in an idle mode and a connected mode, for efficient utilization of network resources. To this end, unlike the existing individual UE paging method, the new paging method delivers a paging message in a unit of a group ID and a paging area.

In addition, regarding an MBMS paging message satisfying requirements for MBMS service notification, newly defined MBMS paging messages are exchanged between a CN and an RNC in order to solve the inefficiency problem of the existing paging method.

The paging message must be transmitted so that the following requirements for MBMS service notification are satisfied. First, MBMS service notification must be delivered to all cells in an MBMS service area. Second, all UEs that request an MBMS service must be able to receive MBMS service notification regardless of an RRC state of a UE. Third, in order to minimize power consumption, UEs that request an MBMS service must check at regular intervals whether a service notification is received, rather than continuously await an MBMS notification. Finally, an MBMS group specific ID must be used, for example, TMGI (Temporary MBMS Group Identity) can be used.

In this regard, the present invention proposes a mutual operation between networks according to an MBMS paging method. Since a paging message according to the present invention uses a group ID, despite the efficiency of network resources, the present invention proposes a paging method based on a position and RRC state of each UE. Accordingly, a method of considering an RRC state of an MBMS service subscriber and a service area in using TMGI is required. In particular, such a message must be delivered in a unit of a paging area.

MBMS paging must be performed on all UEs in an MBMS service area for an MBMS service subscriber group consisting of UEs in different states. The present invention defines a new MBMS service area, and includes UE information based on an RRC state in the paging message. In addition, the present invention utilizes a DRX coefficient in order to deliver a paging message at optimized intervals. The present invention proposes an MBMS paging message including the above IEs (Information Elements). The MBMS service area can have information on a cell not supporting an MBMS service in its low data structure. In addition, it is possible to enable an RNC to deliver a paging message to a UE using DCCH based on information of each UE according to an RRC state.

In order to send a paging message to UEs currently in a connected mode, not in a CELL_PCH state, an SGSN delivers, to an RNC, information on a UE in the connected mode among the UEs that requested the current MBMS service. In response, the RNC transmits a paging message to UEs in the connected mode among the UEs expected to receive the current MBMS service data, using DCCH. Upon receiving the paging message including information indicating an RRC sate of each UE from the SGSN, the RNC delivers the MBMS paging message to the UE, thereby remarkably reducing a network load through sharing of network resources and also reducing a total transmission time of the paging message.

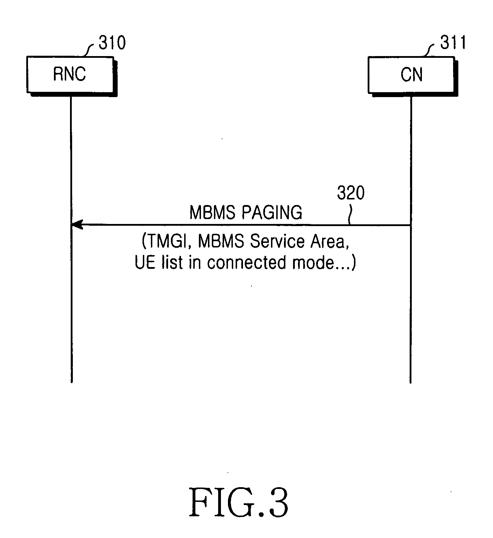

The present invention proposes a signal transmission method between an SGSN and an RNC for efficient utilization of network resources when transmitting a paging message to several users. An MBMS service requires group paging in an MBMS notification process. As illustrated in FIG. 3, an MBMS paging message 320 is connectionless signaling delivered from a CN 311 to an RNC 310. Therefore, in the present invention, the IEs needed for an MBMS paging message are formed such that the requirements for the MBMS service notification are satisfied, and operations of a CN, an RNC and a UE, performed based on such IEs, will be described below.

An MBMS paging message is a message between a network and an RNC, for supporting PTM connection between the network and several UEs. In this regard, the MBMS paging message has the following IEs in order to increase efficiency of network resources and minimize its transmission time. The proposed method is a message exchanging method for supporting an MBMS paging method on a network using TMGI (Temporary MBMS Group Identity) indicating an MBMS group newly introduced to simultaneously deliver a paging signal to a service subscriber group, instead of using IMSI for identifying each UE. When the TMGI is used, an RRC state of an individual MBMS service subscriber, a service area where a UE is located, and a DRX cycle of each UE cannot be determined for each UE. This is because as a common MBMS service group ID is used, information indicating whether each UE is located in an MBMS service area and whether an RRC state corresponds to a connected mode or an idle mode cannot be directly described. Accordingly, an RNC changes a paging method to a UE according to an RRC state of the UE.

Table 1 below shows IEs of an MBMS paging message proposed in the present invention.

**Table 1**

| IE/Group Name | Presence | IE type and reference |
|---|---|---|
| Message Type | M | It indicates MBMS paging |
| TMGI | M | Temporary MBMS Group Identity |
| MBMS Service Area ID | M | Range for Group paging. For example, range for transmission of Notification message |
| Paging Area ID | M | Set of paging areas in a unit of routing area in MBMS service area |
| Unsupported Cell_List | O | Set of cells capable of not supporting MBMS service in paging area |
| Paging Cause | M | Initial Notification, Repeated Notification, etc. |
| MBMS DRX Cycle Length Coefficient | O | Common DRX value of Each MBMS subscriber UE |
| Global CN-ID | O | Information on CN from which MBMS paging message is transmitted |
| UE List in Connected Mode | M | Set of UEs in RRC connected mode among UEs belonging to TMGI |

That is, the MBMS paging message according to the present invention includes the following new IEs.

The MBMS paging is performed by delivering, by a CN, an MBMS paging message defined on an Iu interface to an effective MBMS service area including an MBMS service subscriber, using TMGI. Therefore, an MBMS paging message is repeated as many times as the number of MBMS service areas. At this point, a type of signaling is connectionless signaling. Therefore, the paging message is delivered to MBMS service subscriber group belonging to the MBMS paging area according to identity (ID) information indicating the MBMS service area.

That is, the reason for distinguishing a cell where a UE requesting the MBMS service is located from a cell not supporting the MBMS service in transmitting the paging message is to efficiently use network resources. In other words, the core network efficiently delivers a paging signal by providing RRC state information of each UE to the RNC.

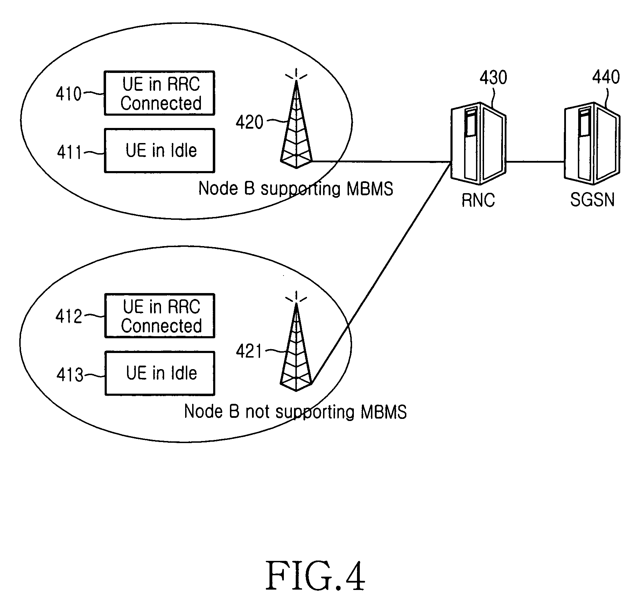

FIG. 4 is a diagram illustrating distribution of UEs according to an MBMS service area and an RRC state of each UE. Referring to FIG 4, when UEs 410 to 413 have subscribed to an MBMS service, how a Node B 420 supporting the MBMS service and a Node B 421 not supporting the MBMS service deliver an MBMS paging message must be determined considering the UEs 410 and 412 in an RRC connected mode and the UEs 411 and 413 in an idle mode.

An MBMS paging message proposed in the present invention is a message including the following new IEs.

### 1. TMGI

This is a value assigned to service subscribers in a group of subscribers having subscribed to a particular MBMS service, and is a value given to identify a particular MBMS service. The TMGI is uniquely assigned to one of CN entities (BM-SC, GGSN, and SGSN) at an occurrence time of the MBMS service. When a particular UE joins an MBMS service, the SGSN delivers the TMGI to the UE via an RNC.

When there exists paging for the MBMS service, the SGSN transmits an MBMS paging message including the TMGI information to the RNC. Upon receiving the MBMS paging message, the RNC broadcasts this through a public network. At this point, each UE receives a paging indication message at regular intervals according to DRX, or a defined reception timing value, of each UE. If TMGI of the paging indication message received at a corresponding time is identical to TMGI of an MBMS service to which a particular UE is subscribing, the UE receives the paging message. The entire efficiency is improved by performing MBMS service paging, using a group ID of TMGI.

### 2. MBMS Service Area ID

This represents an area where a UE can receive an MBMS service, and also represents a routing area unit by which the SGSN sends an MBMS paging message. The MBMS Service Area ID is stored in one of CN entities (BM-SC, GGSN and SGSN). When there exists paging for the MBMS service, as many identical MBMS paging messages as the number of MBMS Service Area IDs are delivered. At this point, since an RNC supporting the MBMS service and an RNC not supporting the MBMS service may exist in each MBMS Service Area, the RNCs must be distinguished to efficiently perform an operation of the RNC.

Accordingly, the paging message can be transmitted along with information on the cell not supporting the MBMS service included in each MBMS Service Area. Also, the paging message can be transmitted along with information on an RRC state of each UE included in each MBMS Service Area. This will be described in detail with reference to 'UE information in Connected Mode' below.

### 3. Unsupported Cell_List

As indicated above, an MBMS paging message is not delivered to the cells not supporting the MBMS service so as to increase the entire efficiency of an RNC operation. When an error occurs in a Node B or a particular cell, or when an MBMS service is not supported due to a low system version, the RNC operation is controlled so as not to transmit the MBMS paging message.

A core network transmits an MBMS paging message including CELL_ID which is identity information for a cell not supporting the MBMS service, to the RNC. In response, the RNC does not perform MBMS service paging on a particular cell, using information on Unsupported Cell of a paging message.

### 4. MBMS DRX Cycle Length Coefficient

Each UE in an idle mode wakes up at a particular time at regular intervals and detects an MBMS paging message, based on a DRX (Discontinuous Reception) value defined so as to receive a paging message at a set time. The UEs may have different DRX Cycle Lengths. In this regard, since the MBMS paging message is a paging message in a group unit for a corresponding MBMS service, it is efficient to transmit the MBMS paging message in a unit of a common DRX value of the UEs. Therefore, the MBMS DRX Cycle Length Coefficient can be commonly set for all service areas, or this value can be determined only for a UE in the current MBMS Service Area.

### 5. Global CN-ID

A CN and an RNC can be connected to each other using an Iu-Flex interface. Whether an MBMS paging message is received from a Home PLMN (Public Land Mobile Network) or a Roaming PLMN is determined using Global CN-ID. This IE value is determined by an SGSN.

### 6. UE information in Connected Mode

The MBMS paging message must be able to be transmitted to all UEs that requested an MBMS service, regardless of an RRC state of a UE. Since the MBMS paging message is delivered from an SGSN to an RNC in a unit of MBMS service area, an IE capable of distinguishing an RRC state of a UE is required. In this regard, mobility of each UE is managed by the SGSN. That is, the SGSN manages information related to connection for a packet domain of each UE in an MM-state field of Mobility Management Context, using a value of such flag as PMM-Idle or PMM-Connected. Upon receiving the MBMS paging message including RRC state information of each UE from the SGSN, the RNC differently sets a paging method according to the RRC state of the corresponding UE.

For a UE in an idle mode, the MBMS paging message is transmitted over a paging channel (PCH) at a DRX time of the UE. In contrast, for a UE in an RRC connected mode, the MBMS paging message is delivered over a dedicated control channel (DCCH).

The MBMS paging message is transmitted along with information on a UE in a connected mode included in each MBMS Service Area. By previously delivering, to the RNC, information on a UE currently in a connected mode among UEs to which MBMS service notification must be delivered, the RNC can page UEs in the connected mode using DCCH rather than PCH. The RNC can change a method for indicating initiation of the MBMS service according to a current state of the UE.

An MBMS paging message including the above-stated IEs is delivered from an SGSN to an RNC. Regarding the IEs, operations of the network entities, i.e., SGSN, RNC and UE, will now be described below.

### 1) Operation of SGSN

The SGSN, as illustrated in FIG 1, is connected to an HLR , a GGSN , and an RNC, and also connected to a BM-SC via the GGSN 161. Here, the BM-SC serves as an application server and a controller, and generates and manages such MBMS IEs as TMGI, MBMS Service Area ID and Unsupported Cell_List. In addition, the TMGI is generated during occurrence of an MBMS service, and is substantially generated before publication of the corresponding MBMS service. The BM-SC assigns a different unique TMGI value according to service, and when the UE joins the service, it transmits TMGI to a corresponding UE via the RNC. MBMS Service Area ID and Unsupported Cell_List can be managed by the BM-SC, the GGSN and the SGSN. In addition, the SGSN manages mobility of each UE so as to use a different paging method according to an RRC state of the UE. Therefore, the SGSN transmits a paging message including the above IEs, i.e., TMGI, MBMS Service Area ID, Unsupported Cell_List, MBMS DRX Cycle Length Coefficient, Global CN-ID and UE information in Connected Mode, to the RNC belonging to an MBMS service area.

### 2) Operation of RNC

Upon receiving an MBMS paging message from the SGNS, an RNC belonging to the MBMS service area delivers a paging message to a UE requesting the MBMS service, using Unsupported Cell_List and UE information in Connected Mode among IEs of the MBMS paging message. At this point, the RNC does not transmit a paging message so that MBMS service announcement is delivered to a Node B not supporting the MBMS service, using Unsupported Cell_List. In addition, the RNC transmits a paging message for the MBMS service over a paging channel to a UE in an idle mode, using UE information in Connected Mode. At this point, a paging message is transmitted by group paging in a unit of Node B. On the other hand, the RNC transmits the MBMS paging message to a corresponding UE in an RRC connected mode over DCCH on a PTP connection basis, using information on all UEs in the connected mode.

### 3) Operation of UE

When a UE is in an idle mode, the UE periodically receives a PICH signal transmitted from a Node B, and determines whether a PCH signal is transmitted thereto, based on the received PICH signal. Here, the UE periodically wakes up using a DRX value, and analyzes the PICH message. The UE compares a TMGI value of the PICH with a TMGI value stored therein, and when they are identical to each other, the UE receives a paging message transmitted over PCH.

In summary, for each UE requesting an MBMS service, a core network transmits to an RNC an MBMS paging message that considers information on a cell supporting the MBMS service and an RRC connected mode and an idle mode of each UE, so that the RNC more efficiently transmits an MBMS paging message. In addition, since the RNC has MBMS service support information existing in the core network, it is possible to remarkably reduce unnecessary signaling on an Iu interface.

The present invention performs an operation among a core network, an RNC and a UE, using an MBMS paging message having newly defined IEs for an MBMS service, thereby remarkably reducing a network loss between an SGSN and an RNC of the core network, sharing network resources, and remarkably reducing a total transmission time required for paging. In this manner, the invention performs efficient MBMS paging. When it is desired to provide an MBMS service to a plurality of users, the MBMS paging proposed in the present invention can efficiently achieved by transmitting a paging message taking an RRC state into consideration.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for transmitting a paging message for a broadcast service in a mobile communication system having a plurality of user equipments (UEs), a plurality of cells where the UEs are located, a Node B occupying the cells, and a radio network controller (RNC) controlling the Node B, the system providing the broadcast service transmitted from a core network to the UEs via the RNC, wherein the core network transmits information on UEs in a connected mode among UEs desiring to receive the broadcast service to the RNC along with the paging message for the broadcast service.

2. The method of claim 1, wherein the paging message further comprises identification information indicating a service area where the broadcast service is provided.

3. The method of claim 1, wherein the paging message further comprises identification information for a cell not supporting the broadcast service.

4. The method of claim 1, wherein the paging message further comprises information on a reception cycle of UEs expected to receive the paging message.

5. The method of claim 1, wherein the paging message further comprises temporary MBMS group identity (TMGI) information individually assigned to the broadcast service.

6. The method of claim 5, wherein the paging message further comprises information on a common paging-only time among paging-only times for UEs not in the connected mode but desiring to receive the broadcast service.

7. The method of claim 1, wherein upon receiving the information on the UEs in the connected mode, the RNC transmits the paging message to a UE using a dedicated control channel (DCCH) set up to the UE.

8. The method of claim 1, wherein upon receiving the information on the UEs in the connected mode, the RNC transmits the paging message to UEs not in the connected mode but requesting the MBMS service, using a paging channel.

9. A method for transmitting paging information to user equipments (UEs) to provide a multimedia broadcast/multicast service (MBMS) in a mobile communication system including the UEs, a plurality of cells where the UEs are located, a Node B occupying the cells, a radio network controller (RNC) controlling the Node B, and a core network for providing the MBMS service to the UEs, the method comprising the steps of:
transmitting to the RNC, by the core network, paging information including information on UEs in a connected mode among the UEs requesting the MBMS service,; and
transmitting to the UEs in the connected mode, by the RNC, paging information for the MBMS service over a dedicated control channel set up.

10. The method of claim 9, wherein the RNC transmits the paging information for the MBMS service to UEs not in the connected mode, over a paging channel.

11. The method of claim 9, wherein the core network transmits the paging information according to a service area where the MBMS service is provided.

12. The method of claim 9, wherein the core network repeatedly transmits the paging information according to the number of service areas where the MBMS service is provided.

13. The method of claim 9, wherein the paging information further comprises message type information indicating paging information for the MBMS service.

14. The method of claim 9, wherein the paging information further comprises temporary MBMS group identity (TMGI) information individually assigned to the MBMS service.

15. The method of claim 9, wherein the paging information further comprises MBMS service area identity (ID) information assigned to a particular area where the MBMS service is available.

16. The method of claim 9, wherein the paging information further comprises a set of information on cells not supporting the MBMS service.

17. The method of claim 9, wherein the paging information further comprises information on a reception cycle of the UEs for which the MBMS service is to be received.

18. The method of claim 17, wherein the reception cycle is determined in a unit of a common value of discontinuous reception (DRX) coefficients of the UEs requesting the MBMS service.
